# EUROPÄISCHE PATENTSCHRIFT

(11) **EP 4 191 056 B1**
(45) Veröffentlichungstag und Bekanntmachung des Hinweises auf die Patenterteilung: **21.01.2026**
(21) Anmeldenummer: 23164383.4
(22) Anmeldetag: 27.03.2023
(51) Int. Cl.: F03D 13/10, F03D 13/20

(54) **VERFAHREN ZUM HERSTELLEN VON TEILSCHALEN EINES STAHLTURMRINGSEGMENTS EINES TURMS EINER WINDENERGIEANLAGE**
METHOD FOR PRODUCING PARTIAL SHELLS OF A STEEL TOWER RING SEGMENT OF A TOWER OF A WIND TURBINE
PROCÉDÉ DE FABRICATION DE SOUS-COQUES D'UN SEGMENT DE BAGUE DE TOUR EN ACIER D'UNE TOUR D'UNE ÉOLIENNE

(43) Veröffentlichungstag der Anmeldung: 07.06.2023
(73) Patentinhaber: Wobben Properties GmbH, 26607 Aurich (DE)
(72) Erfinder:
(74) Vertreter: Eisenführ Speiser

(56) Entgegenhaltungen:
- DE-A1- 102013 107 059
- DE-A1- 102015 110 344
- US-A1- 2017 122 292
- US-A1- 2018 179 777

## Beschreibung

Die Erfindung betrifft ein Verfahren zum Herstellen von Teilschalen eines Stahlturmringsegments, insbesondere zum Errichten, eines Turms einer Windenergieanlage.

Teilschalen von Ringsegmenten werden oft durch Trennen von Ringsegmenten hergestellt. Verschiedene Verfahren sind beschrieben beispielsweise in EP3278915A1, DE2947355A1, DE60317372T2 und EP2824257A1. Es existiert jedoch Bedarf an Verbesserungen, insbesondere hinsichtlich der Wirtschaftlichkeit und Sicherheit der Verfahren.

Im erweiterten europäischen Recherchenbericht werden u.a. folgende Dokumente zitiert: US 2017/122292 A1 und DE 10 2015 110344 A1. US 2017/122292 A1 betrifft ein Verfahren zur Herstellung von Turmsegmenten und insbesondere ein Verfahren zur Herstellung von Windkraftturmsektionen, die aus einer Vielzahl von langgestreckten Turmsegmenten bestehen. DE 10 2015 110344 A1 betrifft ein Teilstück einer Turmsektion, wobei das Teilstück ein Schalensegment der Turmsektion und zumindest einen an einer Längsseite des Schalensegments befestigten Längsflansch zum Verbinden mit einem Längsflansch eines weiteren Teilstücks der Turmsektion aufweist sowie ein Verfahren zum Herstellen mindestens eines Teilstücks einer Turmsektion.

Es ist daher eine Aufgabe der vorliegenden Erfindung, ein Verfahren zum Herstellen von Teilschalen eines Stahlturmringsegments, insbesondere zum Errichten, eines Turms einer Windenergieanlage bereitzustellen, welches Nachteile existierender Lösungen vermindert oder beseitigt.

Insbesondere ist es eine Aufgabe der vorliegenden Erfindung, ein Verfahren zum Herstellen von Teilschalen eines Stahlturmringsegments, insbesondere zum Errichten, eines Turms einer Windenergieanlage bereitzustellen, welches effizienter und/oder kostengünstiger und/oder einfacher und/oder sicherer ist.

Diese Aufgabe wird erfindungsgemäß gelöst durch ein Verfahren zum Herstellen von Teilschalen eines Stahlturmringsegments, insbesondere zum Errichten, eines Turms einer Windenergieanlage, umfassend, Bereitstellen eines Stahlturmringsegments, Vorsehen von ersten Verbindungsflanschen an einer ersten geplanten Trennlinie und von zweiten Verbindungsflanschen an einer zweiten geplanten Trennlinie, Trennen an der ersten geplanten Trennlinie, Trennen an der zweiten geplanten Trennlinie, wobei beim Trennen an der zweiten geplanten Trennlinie die ersten Verbindungsflansche temporär miteinander verbunden sind.

Ein Turmringsegment kann auch als Turmsektion bezeichnet werden.

Geplante Trennlinien werden hier insbesondere als gedachte Linien verstanden, die vorzugsweise parallel zu einer Längsachse des Stahlturmringsegments verlaufen und entlang derer ein Trennschnitt, vorzugsweise mittels einer Trennvorrichtung, vorgenommen wird. Die geplanten Trennlinien sind vorzugsweise im Umfangsrichtung des Stahlturmringsegments voneinander beabstandet angeordnet, vorzugsweise äquidistant beabstandet.

Verbindungsflansche werden hier insbesondere verstanden als Flanschpaare, wobei entlang jeder der geplanten Trennlinien jeweils benachbart zur Trennlinie ein Flansch angeordnet ist und die beiden benachbart zu einer Trennlinie angeordneten Verbindungsflansche ein Flanschpaar bilden. Die Verbindungsflansche sind vorzugsweise mit dem Stahlturmringsegment verbunden, vorzugsweise stoffschlüssig, beispielsweise durch Schweißen.

Die Verbindungsflansche sind vorzugsweise auf einer Innenseite des Stahlturmringsegments angeordnet.

Unter einer temporären Verbindung von Verbindungsflanschen wird hier insbesondere die temporäre Verbindung eines Flanschpaares verstanden. Insbesondere wird hier unter einer temporären Verbindung von Verbindungsflanschen eine lösbare Verbindung, beispielsweise mit Verbindungselementen, verstanden. Die temporäre Verbindung von Verbindungsflanschen umfasst nicht eine Verbindung über das Stahlturmringsegment vor dem Trennen an der Trennlinie und umfasst auch nicht eine etwaige Verbindung über einen Ringflansch.

Gemäß einer bevorzugten Ausführungsform ist vorgesehen, dass das Stahlturmringsegment Stahlblech umfasst und/oder aus Stahlblech besteht.

Türme von Windenergieanlagen sind oft aus verschiedenen Materialien aufgebaut. Beispielsweise können Türme von Windenergieanlagen als Stahlbetontürme oder Stahltürme ausgeführt sein. Es existieren auch Mischformen, bei denen ein Teil, meist ein unterer Teil, aus Stahlbeton und ein oberer Teil aus Stahl ausgeführt ist. Als Stahlturmringsegment wird hier insbesondere ein Turmringsegment eines Stahlturms oder Stahlturmabschnitts verstanden.

Eine bevorzugte Weiterbildung zeichnet sich dadurch aus, dass das Stahlturmringsegment einen Durchmesser von mindestens 4 m aufweist, insbesondere von mindestens 4,3 m oder von mindestens 4,5 m.

Die hier beschriebene Lösung ist insbesondere vorteilhaft für große Stahlturmringsegmente., da diese aufgrund von Transportbeschränkungen nicht am Stück als Ring transportiert werden können, sondern vielmehr eine Zerlegung in Teilschalen aus Transportgründen erforderlich ist.

Gemäß einer bevorzugten Ausführungsform ist vorgesehen, dass nach dem Trennen an der ersten geplanten Trennlinie und dem temporären Verbinden der ersten Verbindungsflansche, und vor dem Trennen an der zweiten geplanten Trennlinie eine Relativbewegung zwischen Stahlturmringsegment und einer Trennvorrichtung erfolgt.

Eine solche Relativbewegung zwischen Stahlturmringsegment und Trennvorrichtung kann aus verschiedenen Gründen vorteilhaft sein: Wenn ein Trennen an mehreren, voneinander beabstandeten Trennlinien erfolgt, ermöglichst die Relativbewegung beispielsweise den (sukzessiven) Einsatz derselben Trennvorrichtung an den voneinander beabstandeten Trennlinien. Zudem kann es vorteilhaft sein, das Stahlturmringsegment zwischen mehreren Trennvorrichtung zu bewegen, um die voneinander beabstandeten Trennlinien zu trennen, wobei ebenfalls eine Relativbewegung zwischen Stahlturmringsegment und Trennvorrichtung auftritt.

Eine weitere bevorzugte Fortbildung zeichnet sich dadurch aus, dass eine oder mehrere weitere geplante Trennlinien vorgesehen sind, an denen vorzugsweise jeweils weitere Verbindungsflansche vorgesehen sind.

Es ist ferner bevorzugt, dass beim Trennen an einer weiteren der geplanten Trennlinien die ersten Verbindungsflansche und die zweiten Verbindungsflansche jeweils temporär miteinander verbunden sind.

Die zuvor beschriebenen Vorteile für eine Ausgestaltung, bei der ein Stahlturmringsegment in zwei Teilschalen getrennt wird, ergeben sich ebenso für das Trennen in drei oder mehrere Teilschalen.

Eine weitere bevorzugte Weiterbildung ist dadurch gekennzeichnet, dass die zweiten Verbindungsflansche beim Trennen an der zweiten geplanten Trennlinie im Wesentlichen nicht miteinander verbunden sind, insbesondere nicht mit Verbindungselementen miteinander verbunden sind, vorzugsweise nicht durch Schrauben und/oder Niete und/oder Klemmelemente und/oder Schweißen und/oder Kleben.

Diese Ausgestaltung erlaubt eine größere Flexibilität in Bezug auf die zum Einsatz kommenden Trennverfahren bzw. die zum Einsatz kommende Trennvorrichtung. Unter "im Wesentlichen nicht verbunden" wird hier insbesondere das Fehlen einer, insbesondere lösbaren, Verbindung zur Übertragung von beim Bewegen des Stahlturmringsegments und/oder beim Trennen auftretenden Kräfte verstanden. Eine Verbindung über das Stahlturmringsegment vor dem Trennen an der Trennlinie und auch eine etwaige Verbindung über einen Ringflansch kann vorliegen, ohne dass die Verbindungsflansche verbunden sind im Sinne dieser Anmeldung. Auch eine lediglich schwache bzw. nicht für eine relevante Kraftübertragung geeignete Verbindung kann vorliegen, ohne dass die Verbindungsflansche verbunden sind im Sinne dieser Anmeldung.

In einer weiteren bevorzugten Ausführungsform ist vorgesehen, dass das Stahlturmringsegment nach dem Trennen an der ersten geplanten Trennlinie und dem temporären Verbinden der ersten Verbindungsflansche bewegt wird.

Dabei ist insbesondere bevorzugt, dass die Relativbewegung durch eine Bewegung des Stahlturmringsegments relativ zu einer Trennvorrichtung erfolgt.

Ferner ist vorzugsweise vorgesehen, dass die Relativbewegung des Stahlturmringsegments rotatorisch, vorzugsweise durch Drehen um seine Längsachse, und/oder translatorisch entlang einer geraden oder, vorzugsweise beliebig im Raum gekrümmten, Linie, beispielsweise durch Versetzen innerhalb eines Herstellungs-, Montage-, Transport- oder Aufstellbereichs, erfolgt.

Eine weitere bevorzugte Weiterbildung zeichnet sich dadurch aus, dass die ersten und zweiten, sowie vorzugsweise weiteren, geplanten Trennlinien nacheinander einer Trennvorrichtung oder mehreren Trennvorrichtungen zugeführt werden.

Wie bereits beschrieben ist es, insbesondere aus produktionstechnischen und/oder Effizienzgründen, vorteilhaft, wenn für das Trennen an mehreren Trennlinien nicht notwendigerweise entsprechend viele Trennvorrichtungen vorgesehen sind, sondern zwischen Trennvorrichtung und Stahlturmringsegment eine Relativbewegung stattfinden kann.

Ein etwaiges Bewegen eines Schneidmittels der Trennvorrichtung entlang der Trennlinie beim Trennvorgang wird nicht unter einer Relativbewegung zwischen Stahlturmringsegment und Trennvorrichtung im Sinne dieser Anmeldung verstanden.

Erfindungsgemäß erfolgt das Trennen an der ersten geplanten Trennlinie und/oder das Trennen an der zweiten geplanten Trennlinie und/oder das Trennen an einer oder mehreren der weiteren geplanten Trennlinien von einem Inneren des Stahlturmringsegments aus.

Diese Ausführungsform ist besonders vorteilhaft in Kombination mit der Ausführung, dass beim Trennen entlang einer Trennlinie die zu dieser Trennlinie gehörigen Verbindungsflansche nicht miteinander verbunden sind. Denn beim Trennen von einem Inneren des Stahlturmringsegments aus könnten Verbindungen der Verbindungsflansche beschädigt oder zerstört werden.

Eine weitere bevorzugte Weiterbildung ist gekennzeichnet durch Lösen der temporären Verbindung der ersten Verbindungsflansche und/oder der zweiten und/oder der weiteren Verbindungsflansche.

In einer weiteren bevorzugten Ausführungsform ist vorgesehen, dass eine Weiterbehandlung der Teilschalen, insbesondere durch Oberflächenbehandlung und/oder Beschichtung, nach dem Lösen der temporären Verbindung der ersten Verbindungsflansche und/oder der zweiten und/oder der weiteren Verbindungsflansche erfolgt.

Die temporäre Verbindung der ersten und/oder zweiten und/oder weiteren Verbindungsflansche dient insbesondere zur Stabilität und Sicherung des Stahlturmringsegments bzw. der Teilschalen beim Trennen. Sobald die Trennung an der ersten und zweiten sowie ggf. weiteren Trennlinien erfolgt ist, können auch die temporären Verbindungen der ersten und zweiten sowie ggf. weiteren Verbindungsflanschen gelöst und die hergestellten Teilschalen weiterbearbeitet werden. Die Weiterbearbeitung der Teilschalen ist vorteilhaft, um auch die beim Trennen an den Trennlinien entstandenen Trennflächen weiterbehandeln zu können.

Gemäß einem weiteren Aspekt der Erfindung wird die eingangs genannte Aufgabe gelöst durch ein Verfahren zur Errichtung eines Turms einer Windenergieanlage, umfassend: Herstellen von Teilschalen eines Stahlturmringsegments in einem zuvor beschriebenen Verfahren, Transportieren der Teilschalen zum Aufstellort der Windenergieanlage, wobei die Teilschalen vorzugsweise nicht miteinander zu einem Stahlturmringsegment verbunden sind während des Transports, Verbinden der Teilschalen zu einem Stahlturmringsegment am Aufstellort der Windenergieanlage, vorzugsweise am Boden oder in Bodennähe, Verbringen des Stahlturmringsegments an eine Einbauposition am Turm der Windenergieanlage, beispielsweise auf ein Fundament oder ein bereits eingebautes Turmringsegment, wobei vorzugsweise das Stahlturmringsegment an seiner Einbauposition befestigt wird.

Das Verfahren zur Errichtung eines Turms einer Windenergieanlage ermöglicht es in vorteilhafter Weise, die Teilschalen eines Stahlturmringsegments zu transportieren, ohne dass sie miteinander zu einem Stahlturmringsegment verbunden sind. Vorzugsweise werden die Teilschalen also voneinander gelöst und als einzelne Teilschalen transportiert. Dies schließt nicht aus, dass zwei oder mehrere Teilschalen zusammen auf einem gemeinsamen Transporter angeordnet, beispielsweise gestapelt, und/oder befestigt und/oder transportiert werden. Die Transportvorteile ergeben sich bereits dadurch, dass die Teilschalen im Transportzustand nicht zu einer ringförmigen Struktur verbunden sind.

Hinsichtlich der Vorteile, bevorzugten Ausführungsformen und Details der einzelnen Aspekte und ihrer bevorzugten Ausführungsformen wird ebenfalls auf die entsprechenden Vorteile, bevorzugten Ausführungsformen und Details verwiesen, die mit Bezug auf die jeweils anderen Aspekte beschrieben sind.

Weitere vorteilhafte Ausführungsformen ergeben sich aus der Kombination einzelner, mehrerer oder aller der hier beschriebenen bevorzugten Merkmale.

Bevorzugte Ausführungsbeispiele werden beispielhaft anhand der beiliegenden Figuren beschrieben. Es zeigen:
- Figur 1:: eine schematische Darstellung einer Windenergieanlage;
- Figur 2:: eine schematische Darstellung von Verfahrensschritten einer beispielhaften Ausführungsform des Verfahrens zum Herstellen von Teilschalen eines Stahlturmringsegments;
- Figur 3:: eine schematische Darstellung eines beispielhaften Stahlturmringsegments;
- Figur 4:: das Stahlturmringsegment nach Figur 3 nach dem Trennen an der ersten Trennlinie;
- Figur 5:: das Stahlturmringsegment nach Figur 4 nach dem Verbinden der ersten Verbindungsflansche;
- Figur 6:: das Stahlturmringsegment nach Figur 5 nach der rotatorischen Relativbewegung;
- Figur 7:: das Stahlturmringsegment nach Figur 6 nach dem Trennen an der zweiten Trennlinie; und
- Figur 8:: die beiden nach dem Lösen der Verbindung der ersten Verbindungsflansche entstandenen Teilschalen.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

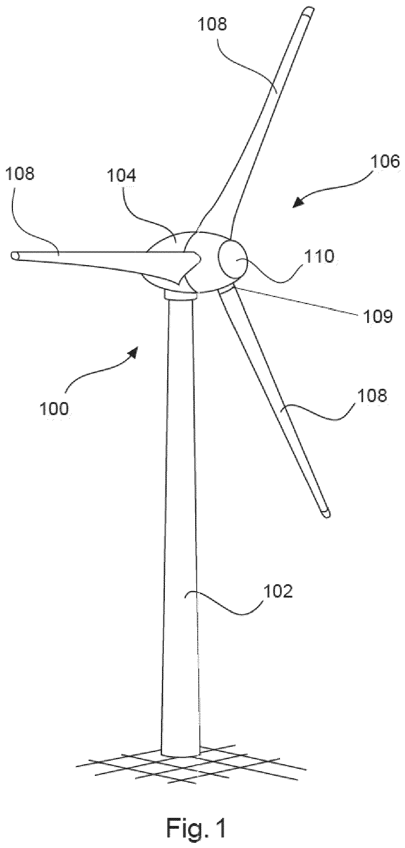

Fig. 1 zeigt eine schematische Darstellung einer Windenergieanlage. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Das hier beschriebene Verfahren 100 ist insbesondere vorgesehen zum Errichten eines Turms 102 einer Windenergieanlage 100.

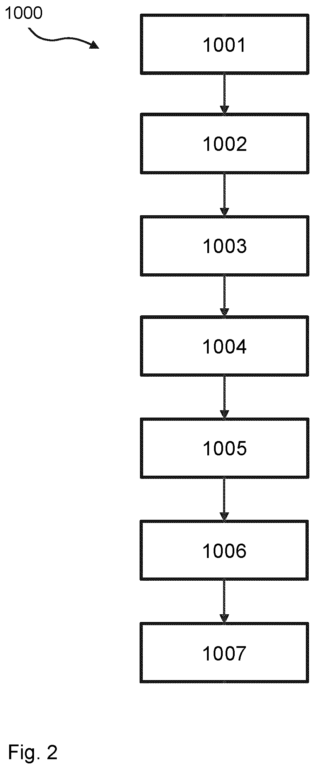

In Figur 2 sind Verfahrensschritte einer beispielhaften Ausführungsform des Verfahrens 1000 zum Herstellen von Teilschalen eines Stahlturmringsegments schematisch dargestellt.

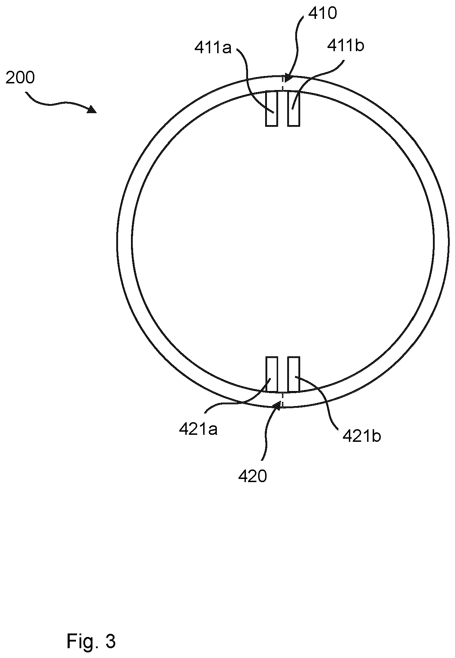

Die Figuren 3 bis 8 zeigen Zwischenschritte im Detail am Stahlturmringsegment 200 bzw. den Teilschalen 310, 320. Im hier gezeigten Beispiel wird das Stahlturmringsegment 200 lediglich in zwei Teilschalen 310, 320 geteilt. Wie oben beschrieben ist jedoch die Trennung in drei oder mehr Teilschalen möglich.

Zunächst wird im Schritt 1001 ein Stahlturmringsegment 200 bereitgestellt. Im Schritt 1002 werden an einer ersten geplanten Trennlinie 410 erste Verbindungsflansche 411a, b und an einer zweiten geplanten Trennlinie 420 zweite Verbindungsflansche 421a, b vorgesehen (s. auch Fig. 3). Die ersten und zweiten Verbindungsflansche 411a, b 421a, b sind auf der Innenseite des Stahlturmringsegments 200 angeordnet.

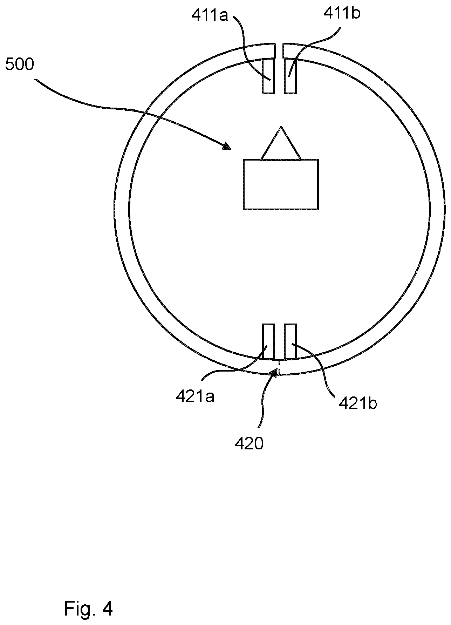

Im Schritt 1003, und wie in Fig. 4 zu erkennen ist, erfolgt mittels einer Trennvorrichtung 500 aus dem Inneren des Stahlturmringsegments 200 heraus das Trennen an der ersten geplanten Trennlinie 410. Die ersten Verbindungsflansche 411a, b sind hierbei nicht verbunden.

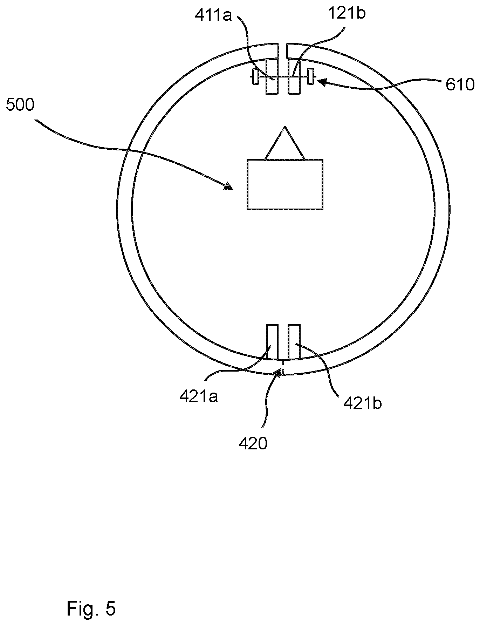

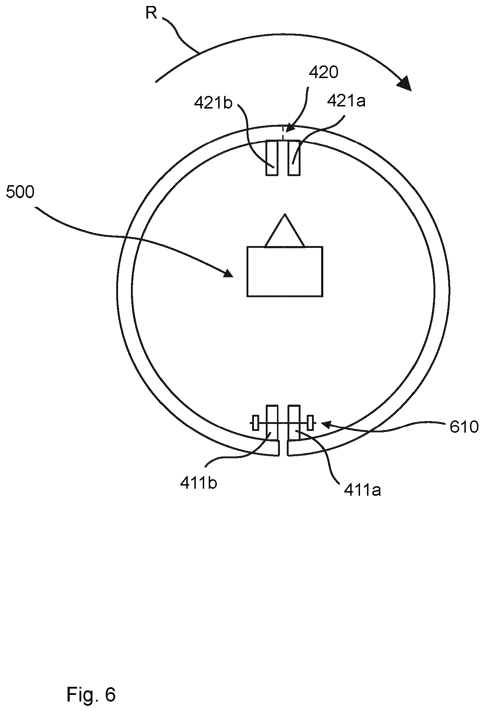

Im Schritt 1004 werden die ersten Verbindungsflansche 411a, b lösbar und temporär über Verbindungselemente 610 miteinander verbunden (s. auch Fig. 5). Ferner wird in Schritt 1005 das Stahlturmringsegment 200 relativ zur Trennvorrichtung 500 rotatorisch in Richtung des Pfeils R um die Längsachse des Stahlturmringsegments 200 bewegt, so dass nun die zweite geplante Trennlinie 420 der Trennvorrichtung 500 zugeführt ist (s. auch Fig. 6).

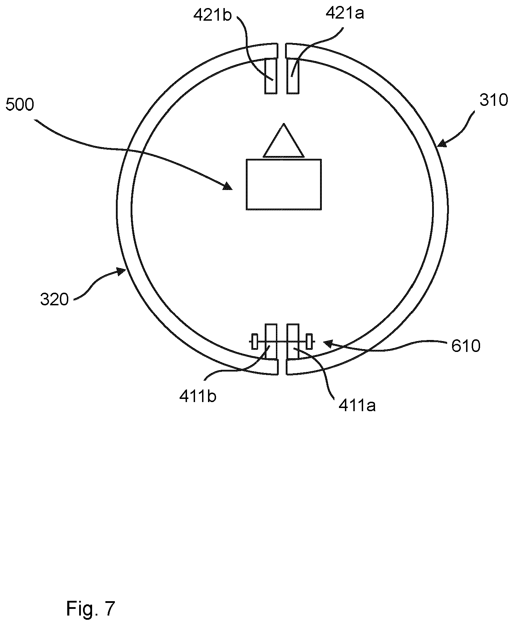

Im Schritt 1006 und wie in Fig. 7 zu erkennen ist, erfolgt mittels der Trennvorrichtung 500 aus dem Inneren des Stahlturmringsegments 200 heraus dann das Trennen an der zweiten geplanten Trennlinie 420. Die zweiten Verbindungsflansche 421a, b sind hierbei nicht verbunden, da eine Verbindung der zweiten Verbindungsflansche 421a, b beim Trennen an der zweiten geplanten Trennlinie 420 mittels der Trennvorrichtung 500 aus dem Inneren des Stahlturmringsegments 200 heraus beschädigt werden könnten.

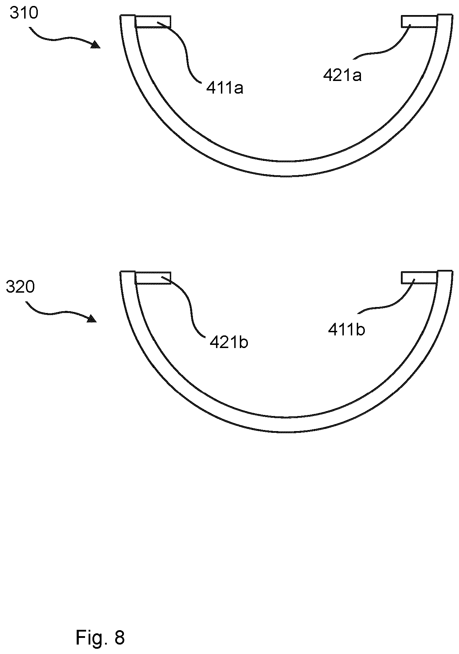

Im Schritt 1007 und wie in Fig. 8 zu erkennen ist, wird dann die temporäre Verbindung der ersten Verbindungsflansche 411a, b gelöst, so dass zwei Teilschalen 310, 320 gebildet sind, die leichter transportiert werden können als zu einem Stahlturmringsegment 200 zusammengefügte Teilschalen.

## Patentansprüche

1. Verfahren (1000) zum Herstellen von Teilschalen (310, 320) eines Stahlturmringsegments (200), insbesondere zum Errichten, eines Turms (102) einer Windenergieanlage (100), umfassend,
- Bereitstellen eines Stahlturmringsegments (200),
- Vorsehen von ersten Verbindungsflanschen (411a, b) an einer ersten geplanten Trennlinie (410) und von zweiten Verbindungsflanschen (421a, b) an einer zweiten geplanten Trennlinie (420),
- Trennen an der ersten geplanten Trennlinie (410),
- Trennen an der zweiten geplanten Trennlinie (420),
- wobei beim Trennen an der zweiten geplanten Trennlinie (420) die ersten Verbindungsflansche (411a, b) temporär miteinander verbunden sind
- **dadurch gekennzeichnet, dass** das Trennen an der ersten geplanten Trennlinie (410) und/oder das Trennen an der zweiten geplanten Trennlinie (420) und/oder das Trennen an einer oder mehreren der weiteren geplanten Trennlinien von einem Inneren des Stahlturmringsegments (200) aus erfolgt.

2. Verfahren (1000) nach dem vorhergehenden Anspruch,
**dadurch gekennzeichnet, dass** das Stahlturmringsegment (200) Stahlblech umfasst und/oder aus Stahlblech besteht.

3. Verfahren (1000) nach mindestens einem der vorhergehenden Ansprüche, **dadurch gekennzeichnet, dass** das Stahlturmringsegment (200) einen Durchmesser von mindestens 4 m aufweist, insbesondere von mindestens 4,3 m oder von mindestens 4,5 m.

4. Verfahren (1000) nach mindestens einem der vorhergehenden Ansprüche, **dadurch gekennzeichnet, dass** nach dem Trennen an der ersten geplanten Trennlinie (410) und dem temporären Verbinden der ersten Verbindungsflansche (411a, b), und vor dem Trennen an der zweiten geplanten Trennlinie (420) eine Relativbewegung zwischen Stahlturmringsegment (200) und einer Trennvorrichtung (500) erfolgt.

5. Verfahren (1000) nach mindestens einem der vorhergehenden Ansprüche, **dadurch gekennzeichnet, dass** eine oder mehrere weitere geplante Trennlinien vorgesehen sind, an denen vorzugsweise jeweils weitere Verbindungsflansche vorgesehen sind.

6. Verfahren (1000) nach mindestens einem der vorhergehenden Ansprüche, **dadurch gekennzeichnet, dass** beim Trennen an einer weiteren der geplanten Trennlinien die ersten Verbindungsflansche (411a, b) und die zweiten Verbindungsflansche (421a, b) jeweils temporär miteinander verbunden sind.

7. Verfahren (1000) nach mindestens einem der vorhergehenden Ansprüche, **dadurch gekennzeichnet, dass** die zweiten Verbindungsflansche (421a, b) beim Trennen an der zweiten geplanten Trennlinie (420) im Wesentlichen nicht miteinander verbunden sind, insbesondere nicht mit Verbindungselementen (610) miteinander verbunden sind, vorzugsweise nicht durch Schrauben und/oder Niete und/oder Klemmelemente und/oder Schweißen und/oder Kleben.

8. Verfahren (1000) nach mindestens einem der vorhergehenden Ansprüche, **dadurch gekennzeichnet, dass** das Stahlturmringsegment (200) nach dem Trennen an der ersten geplanten Trennlinie (410) und dem temporären Verbinden der ersten Verbindungsflansche (411a, b) bewegt wird.

9. Verfahren (1000) nach mindestens einem der vorhergehenden Ansprüche, **dadurch gekennzeichnet, dass** die Relativbewegung durch eine Bewegung des Stahlturmringsegments (200) relativ zu einer Trennvorrichtung (500) erfolgt.

10. Verfahren (1000) nach mindestens einem der vorhergehenden Ansprüche, **dadurch gekennzeichnet, dass** die Relativbewegung des Stahlturmringsegments (200) rotatorisch, vorzugsweise durch Drehen um seine Längsachse, und/oder translatorisch entlang einer geraden oder, vorzugsweise beliebig im Raum gekrümmten, Linie, beispielsweise durch Versetzen innerhalb eines Herstellungs-, Montage-, Transport- oder Aufstellbereichs, erfolgt.

11. Verfahren (1000) nach mindestens einem der vorhergehenden Ansprüche, **dadurch gekennzeichnet, dass** die ersten und zweiten, sowie vorzugsweise weiteren, geplanten Trennlinien nacheinander einer Trennvorrichtung (500) oder mehreren Trennvorrichtungen zugeführt werden.

12. Verfahren (1000) nach mindestens einem der vorhergehenden Ansprüche, **gekennzeichnet durch**:
- Lösen der temporären Verbindung der ersten Verbindungsflansche (411a, b) und/oder der zweiten und/oder der weiteren Verbindungsflansche (421a, b).

13. Verfahren (1000) nach mindestens einem der vorhergehenden Ansprüche, **dadurch gekennzeichnet, dass** eine Weiterbehandlung der Teilschalen (310, 320), insbesondere durch Oberflächenbehandlung und/oder Beschichtung, nach dem Lösen der temporären Verbindung der ersten Verbindungsflansche (411a, b) und/oder der zweiten und/oder der weiteren Verbindungsflansche (421a, b) erfolgt.

14. Verfahren zur Errichtung eines Turms einer Windenergieanlage, umfassend:
- Herstellen von Teilschalen (310, 320) eines Stahlturmringsegments (200) in einem Verfahren (1000) nach mindestens einem der vorhergehenden Ansprüche,
- Transportieren der Teilschalen (310, 320) zum Aufstellort der Windenergieanlage (100), wobei die Teilschalen (310, 320) vorzugsweise nicht miteinander zu einem Stahlturmringsegment (200) verbunden sind während des Transports,
- Verbinden der Teilschalen (310, 320) zu einem Stahlturmringsegment (200) am Aufstellort der Windenergieanlage (100), vorzugsweise am Boden oder in Bodennähe,
- Verbringen des Stahlturmringsegments (200) an eine Einbauposition am Turm (102) der Windenergieanlage (100), beispielsweise auf ein Fundament oder ein bereits eingebautes Turmringsegment, wobei vorzugsweise das Stahlturmringsegment (200) an seiner Einbauposition befestigt wird.

## Claims

1. Method (1000) for manufacturing partial shells (310, 320) of a steel tower ring segment (200), in particular for erecting a tower (102) of a wind turbine (100), comprising
- providing a steel tower ring segment (200),
- providing first connecting flanges (411a, b) at a first planned separation line (410) and second connecting flanges (421a, b) at a second planned separation line (420),
- separating at the first planned separation line (410),
- separating at the second planned separation line (420),
- wherein, when separating at the second planned separation line (420), the first connecting flanges (411a, b) are temporarily connected to each other
- **characterised in that** the separation at the first planned separation line (410) and/or the separation at the second planned separation line (420) and/or the separation at one or more of the further planned separation lines is carried out from inside the steel tower ring segment (200).

2. Method (1000) according to the preceding claim,
**characterised in that** the steel tower ring segment (200) comprises steel sheet and/or consists of steel sheet.

3. Method (1000) according to at least one of the preceding claims,
**characterised in that** the steel tower ring segment (200) has a diameter of at least 4 m, in particular of at least 4,3 m or at least 4,5 m.

4. Method (1000) according to at least one of the preceding claims,
**characterised in that**, after separating at the first planned separation line (410) and temporarily connecting the first connecting flanges (411a, b), and before separating at the second planned separation line (420), a relative movement takes place between the steel tower ring segment (200) and a separating device (500).

5. Method (1000) according to at least one of the preceding claims,
**characterised in that** one or more further planned separation lines are provided, at each of which further connecting flanges are preferably provided.

6. Method (1000) according to at least one of the preceding claims,
**characterised in that**, when separating at a further one of the planned separation lines, the first connecting flanges (411a, b) and the second connecting flanges (421a, b) are temporarily connected to each other.

7. Method (1000) according to at least one of the preceding claims,
**characterised in that** the second connecting flanges (421a, b) are essentially not connected to each other when separating at the second planned separation line (420), in particular are not connected to each other with connecting elements (610), preferably not by screws and/or rivets and/or clamping elements and/or welding and/or gluing.

8. Method (1000) according to at least one of the preceding claims,
**characterised in that** the steel tower ring segment (200) is moved after separation at the first planned separation line (410) and temporary connection of the first connecting flanges (411a, b).

9. Method (1000) according to at least one of the preceding claims,
**characterised in that** the relative movement is effected by a movement of the steel tower ring segment (200) relative to a separation device (500).

10. Method (1000) according to at least one of the preceding claims,
**characterised in that** the relative movement of the steel tower ring segment (200) is rotary, preferably by turning about its longitudinal axis, and/or translatory along a straight line or, preferably, any curved line in space, for example by displacement within a manufacturing, assembly, transport or installation area.

11. Method (1000) according to at least one of the preceding claims,
**characterised in that** the first and second, and preferably further, planned separation lines are fed one after the other to a separation device (500) or several separation devices.

12. Method (1000) according to at least one of the preceding claims, **characterised by**:
- loosening the temporary connection of the first connecting flanges (411a, b) and/or the second and/or further connecting flanges (421a, b).

13. Method (1000) according to at least one of the preceding claims,
**characterised in that** further treatment of the partial shells (310, 320), in particular by surface treatment and/or coating, is carried out after the temporary connection of the first connecting flanges (411a, b) and/or the second and/or further connecting flanges (421a, b) has been released.

14. Method for erecting a tower of a wind turbine, comprising:
- manufacturing partial shells (310, 320) of a steel tower ring segment (200) in a method (1000) according to at least one of the preceding claims,
- transporting the partial shells (310, 320) to the installation site of the wind turbine (100), wherein the partial shells (310, 320) are preferably not connected to each other to form a steel tower ring segment (200) during transport,
- Connecting the partial-shells (310, 320) to form a steel tower ring segment (200) at the installation site of the wind turbine (100), preferably on the ground or close to the ground,
- Moving the steel tower ring segment (200) to an installation position on the tower (102) of the wind turbine (100), for example onto a foundation or an already installed tower ring segment, whereby the steel tower ring segment (200) is preferably attached at its installation position.

## Revendications

1. Procédé (1000) de fabrication de coques partielles (310, 320) d'un segment d'anneau de tour en acier (200), en particulier pour construire une tour (102) d'une éolienne (100), comprenant,
- la mise à disposition d'un segment d'anneau de tour en acier (200),
- la prévision de premières brides de liaison (411a, b) sur une première ligne de séparation prévue (410) et de deuxièmes brides de liaison (421a, b) sur une deuxième ligne de séparation prévue (420),
- la séparation sur la première ligne de séparation prévue (410),
- la séparation sur la deuxième ligne de séparation prévue (420),
- dans lequel, lors de la séparation sur la deuxième ligne de séparation prévue (420), les premières brides de liaison (411a, b) sont temporairement reliées entre elles
- **caractérisé en ce que** la séparation sur la première ligne de séparation prévue (410) et/ou
la séparation sur la deuxième ligne de séparation prévue (420) et/ou la séparation sur une ou plusieurs des autres lignes de séparation prévues sont effectuées depuis un intérieur du segment d'anneau de tour en acier (200).

2. Procédé (1000) selon la revendication précédente,
**caractérisé en ce que** le segment d'anneau de tour en acier (200) comprend une tôle d'acier et/ou est constitué de tôle d'acier.

3. Procédé (1000) selon au moins l'une quelconque des revendications précédentes,
**caractérisé en ce que** le segment d'anneau de tour en acier (200) a un diamètre d'au moins 4 m, en particulier d'au moins 4,3 m ou d'au moins 4,5 m.

4. Procédé (1000) selon au moins l'une quelconque des revendications précédentes,
**caractérisé en ce que**, après la séparation sur la première ligne de séparation prévue (410) et la liaison temporaire des premières brides de liaison (411a, b), et avant la séparation sur la deuxième ligne de séparation prévue (420), un mouvement relatif s'effectue entre le segment d'anneau de tour en acier (200) et un dispositif de séparation (500).

5. Procédé (1000) selon au moins l'une quelconque des revendications précédentes,
**caractérisé en ce qu'**une ou plusieurs autres lignes de séparation prévues sont prévues, sur lesquelles sont prévues de préférence respectivement d'autres brides de liaison.

6. Procédé (1000) selon au moins l'une quelconque des revendications précédentes,
**caractérisé en ce que**, lors de la séparation sur une autre des lignes de séparation prévues, les premières brides de liaison (411a, b) et les deuxièmes brides de liaison (421a, b) sont respectivement reliées temporairement entre elles.

7. Procédé (1000) selon au moins l'une quelconque des revendications précédentes,
**caractérisé en ce que** les deuxièmes brides de liaison (421a, b) ne sont sensiblement pas reliées entre elles, en particulier ne sont pas reliées entre elles par des éléments de liaison (610), de préférence ne sont pas reliées par des vis et/ou des rivets et/ou des éléments de serrage et/ou par soudage et/ou collage, lors de la séparation sur la deuxième ligne de séparation prévue (420).

8. Procédé (1000) selon au moins l'une quelconque des revendications précédentes,
**caractérisé en ce que** le segment d'anneau de tour en acier (200) est déplacé après la séparation sur la première ligne de séparation prévue (410) et la liaison temporaire des premières brides de liaison (411a, b).

9. Procédé (1000) selon au moins l'une quelconque des revendications précédentes,
**caractérisé en ce que** le mouvement relatif s'effectue par un déplacement du segment d'anneau de tour en acier (200) par rapport à un dispositif de séparation (500).

10. Procédé (1000) selon au moins l'une quelconque des revendications précédentes,
**caractérisé en ce que** le mouvement relatif du segment d'anneau de tour en acier (200) est rotatif, de préférence est effectué par rotation autour de son axe longitudinal, et/ou par translation le long d'une ligne droite ou, de préférence, incurvée librement dans l'espace, par exemple par déplacement à l'intérieur d'une zone de fabrication, de montage, de transport ou d'installation.

11. Procédé (1000) selon au moins l'une quelconque des revendications précédentes,
**caractérisé en ce que** les première et deuxième lignes de séparation prévues, ainsi que de préférence d'autres lignes de séparation prévues sont amenées successivement à un ou plusieurs dispositifs de séparation (500).

12. Procédé (1000) selon au moins l'une quelconque des revendications précédentes, **caractérisé par** :
- le desserrage de la liaison temporaire des premières brides de liaison (411a, b) et/ou des deuxièmes et/ou des autres brides de liaison (421a, b).

13. Procédé (1000) selon au moins l'une quelconque des revendications précédentes,
**caractérisé en ce qu'**un traitement ultérieur des coques partielles (310, 320), en particulier par un traitement de surface et/ou un revêtement, est effectué après la libération de la liaison temporaire des premières brides de liaison (411a, b) et/ou des deuxièmes et/ou des autres brides de liaison (421a, b).

14. Procédé de construction d'une tour d'une éolienne comprenant :
- la fabrication de coques partielles (310, 320) d'un segment d'anneau de tour en acier (200) selon un procédé (1000) selon au moins l'une quelconque des revendications précédentes,
- le transport des coques partielles (310, 320) vers le lieu d'installation de l'éolienne (100), dans lequel les coques partielles (310, 320) ne sont de préférence pas reliées entre elles en un segment d'anneau de tour en acier (200) pendant le transport,
- la liaison des coques partielles (310, 320) en un segment d'anneau de tour en acier (200) sur le site d'installation de l'éolienne (100), de préférence au sol ou à proximité du sol,
- le déplacement du segment d'anneau de tour en acier (200) sur une position de montage sur la tour (102) de l'éolienne (100), par exemple sur une fondation ou un segment d'anneau de tour déjà monté, dans lequel de préférence le segment d'anneau de tour en acier (200) est fixé sur sa position de montage.
